# EUROPÄISCHE PATENTANMELDUNG

(11) **EP 2 413 383 A2**
(43) Veröffentlichungstag der Anmeldung: **01.02.2012**
(21) Anmeldenummer: 11005468.1
(22) Anmeldetag: 05.07.2011
(51) Int. Cl.: H01L 31/052

(54) **Solarmodul mit einer Kühlstruktur**

(30) Priorität: 27.07.2010 DE 202010010714 U
(71) Anmelder: PA-ID Automation & Vermarktung GmbH, 63801 Kleinostheim (DE)
(72) Erfinder: Mayer, Erich, 63791 Karlstein (DE); Römisch, André, 97903 Collenberg (DE); Hessberger, Alban, 63755 Alzenau (DE)
(74) Vertreter: Grimm, Ekkehard

(57) **Zusammenfassung**

Die Erfindung betrifft ein Solarmodul mit einer Tragestruktur, einer in der Tragestruktur gehaltenen strahlungstransparenten Schutzscheibe, die dotiertes Halbleitermaterial abdeckt, und mit einer das Halbleitermaterial auf der der Schutzscheibe gegenüberliegenden Seite unterlegenden Trägerschicht sowie mit einer auf der Außenseite der Trägerschicht liegenden ein Kühlfluid führenden Kühlstruktur, wobei die Kühlstruktur mehrere durch Rohre gebildete Strömungskanäle aufweist, das dadurch gekennzeichnet ist, dass die Rohre der Strömungskanäle der Kühlstruktur aus einem Kunststoffmaterial gebildet sind und einen Innendurchmesser von 1,5 mm bis 3 mm aufweisen, wobei benachbarte Rohre einen Abstand, von Rohrachse zu Rohrachse gesehen, von 8 mm bis 20 mm aufweisen, dass die Kühlstruktur auf der dem Halbleitermaterial abgewandten Seite durch ein Wärmeisolationsmaterial gedämmt ist, und dass auf der der Kühlstruktur abgewandten Seite des Wärmeisolationsmaterials eine Schutzfolie aufgebracht ist.

## Beschreibung

Die vorliegende Erfindung betrifft ein Solarmodul mit einer Tragestruktur, einer in der Tragestruktur gehaltenen strahlungstransparenten Schutzscheibe, die dotiertes Halbleitermaterial abdeckt, und mit einer das Halbleitermaterial auf der der Schutzscheibe gegenüberliegenden Seite unterlegenden Trägerschicht sowie mit einer auf der Außenseite der Trägerschicht liegenden ein Kühlfluid führenden Kühlstruktur, wobei die Kühlstruktur mehrere durch Rohre gebildete Strömungskanäle aufweist.

Derartige Solarmodule sind allgemein bekannt. Sie stellen die Kombination eines Photovoltaik-Moduls und einer Solarthermie dar und werden auch als Solarhybrid bezeichnet. Ein solcher Solarhybrid kombiniert somit die beiden grundsätzlich unterschiedlichen Prinzipien der Energiegewinnung aus der Sonne, nämlich die Erzeugung von Strom mittels Solarzellen, und der Erzeugung von Wärmeenergie durch die Verwendung von Sonnenkollektoren.

Ein Photovoltaik-Modul besteht aus einem Gehäuse, einer ebenen Glasscheibe, einer transparenten Kunststoffschicht und einem, gewöhnlich aus Silizium gefertigten, Solarchip. Mechanisch versteift wird das Modul durch einen Aluminiumrahmen. Es sind unterschiedliche Typen von Solarzellen, unter anderem mono- und polykristalline Solarzellen sowie Dünnschicht-Solarzellen, bekannt. Während mono- und polykristalline Solarzellen einen höheren Preis, aber auch hohen Wirkungsgrad, aufweisen, bieten Dünnschichtzellen Vorteile bei wenig Licht oder Streulicht und aufgrund ihres niedrigeren Preises. Je nach Ausrichtung des Daches, auf dem die Solarzellen-Module montiert sind, und der Richtung und der Intensität der Sonneneinstrahlung, werden diverse Solarzellen-Typen verwendet.

Solarzellen erzeugen Strom durch einfallende Photonen, die im elektrischen Feld der Raumladungszone des p-n-Übergangs getrennt werden. Die Photonen dringen in die Solarzellen ein und reichern die Valenzelektronen mit Energie an. Das Elektron löst sich schließlich vom Silizium-Atom und hinterlässt ein positiv geladenes Atom. Damit die freien Elektronen in eine Richtung fließen und somit ein Strom entstehen kann, müssen die Vorder- und die Rückseite der Zelle unterschiedlich gepolt werden. Die Silizium-Atome an der Vorderseite werden mit einer geringfügigen Menge an Phosphor-Atomen, welche ein zusätzliches Valenzelektron besitzen, versetzt (dotiert). An der Zellen-Rückseite hingegen werden zusätzlich zu den Silizium-Atomen Bor-Atome, mit nur drei Valenzelektronen, aufgetragen. Das so entstehende Ungleichgewicht zwischen Plus- und Minuspol lässt die Elektronen fließen und es entsteht Strom. ln einem Wechselrichter wird der Gleichstrom dann in Wechselstrom umgewandelt und in das Netz eingespeist.

Gewöhnliche Solarzellen besitzen je nach Typ einen elektrischen Wirkungsgrad von 7 bis 18%. Der Wirkungsgrad wird jedoch von der Temperatur der Solarzelle beeinflusst. Die angegebene Peakleistung von Solarzellen wird bei ca. 25 °C und einer Einstrahlung von 1000W/m² erfasst. Allerdings fällt pro °K Temperaturerhöhung die Leistung der Zellen um ca. 0,5% ab. Da im Sommer die Temperatur von Photovoltaik-Modulen auf 70 bis 90 °C ansteigt, erfahren sie durch diese hohe Temperatur einen Leistungsverlust von 22,5 bis 32,5%. Der elektrische Wirkungsgrad verringert sich so von 14% auf 10,85% und bis zu 9,45%. Ein weiteres Problem ist dasjenige, dass in den Wintermonaten Schnee die Module verdeckt und somit verhindert, dass die Sonne die Zellen erreicht. Dies verringert die wirtschaftliche Attraktivität der Anlage und macht sie weniger rentabel.

Bei Solarmodulen, die als Photothermie bzw. Solarhybrid vertrieben werden, wird versucht, den Photovoltaik-Zellen Wärme zu entziehen, um diese zusätzlich gewonnene Wärmeenergie zur Gebäudeheizung und Trinkwassererwärmung nutzen zu können. Dabei werden auch die Photovoltaikzellen gekühlt, was gleichzeitig den elektrischen Wirkungsgrad verbessert.

Heizen und Kühlen gleichzeitig widerspricht sich hier allerdings in gewisser Weise, da das zum Beheizen von Trinkwasser und Gebäuden benötigte Temperaturniveau außer im Hochsommer kaum unter der Modultemperatur von gewöhnlichen Photovoltaik-Modulen liegt. Der Kühleffekt ist also minimal und die gewonnene Wärme kann im Sommer lediglich für die Erwärmung von Trinkwasser verwendet werden.

Bekannte Solarmodule, die sowohl Strom als auch Wärmeenergie erzeugen, sind zum Beispiel aus der DE 10 2006 032 876 A1 bekannt. ln diesem Dokument wird beschrieben, eine Photovoltaikplatte mit einer Wärmeplatte zu hinterlegen, die ein Rohrsystem aus Kupferrohren aufweist. Mit dieser Wärmeplatte wird die Wärme, die im Bereich der Solarplatte entsteht, zu einem Wärmetauscher geführt.

Die DE 10 2008 049 538 A1 beschreibt eine Lichtbündelung-Photovoltaikanlage mit Flüssigkeitskühlung und Nutzung der thermischen Solarenergie, bei der das Photovoltaikmodul auf einem massiven Kühlkörper angeordnet ist. Der Kühlkörper besitzt einen Flüssigkeitskanal und kann zusätzliche Lamellen zur Passivkühlung umfassen. Durch die Masse des Kühlkörpers wird das Gewicht der Einheit wesentlich erhöht. Außerdem ist diese Kühlung äußerst träge.

Der vorliegenden Erfindung liegt die Aufgabe zugrunde, ein Solarmodul der eingangs beschriebenen Art derart auszugestalten, dass es neben einem hohen Wirkungsgrad sowohl in Bezug auf die Erzeugung von Strom als auch die Erzeugung von Wärme und damit Kühlung der Photovoltaikeinheit einen äußerst leichtgewichtigen Aufbau aufweist; außerdem soll das Kühlsystem eine gute Dynamik aufweisen, indem es schnell auf Temperaturänderungen reagieren kann.

Gelöst wird diese Aufgabe durch ein Solarmodul mit einer Tragestruktur, einer in der Tragestruktur gehaltenen strahlungstransparenten Schutzscheibe, die dotiertes Halbleitermaterial abdeckt, und mit einer das Halbleitermaterial auf der der Schutzscheibe gegenüberliegenden Seite unterlegenden Trägerschicht sowie mit einer auf der Außenseite der Trägerschicht liegenden ein Kühlfluid führenden Kühlstruktur, wobei die Kühlstruktur mehrere durch Rohre gebildete Strömungskanäle aufweist, das dadurch gekennzeichnet ist, dass die Rohre der Strömungskanäle der Kühlstruktur aus einem Kunststoffmaterial gebildet sind und einen lnnendurchmesser von 1,5 mm bis 3 mm aufweisen, wobei benachbarte Rohre einen Abstand, von Rohrachse zu Rohrachse gesehen, von 8 mm bis 20 mm aufweisen, dass die Kühlstruktur auf der dem Halbleitermaterial abgewandten Seite durch ein Wärmeisolationsmaterial gedämmt ist, und dass auf der der Kühlstruktur abgewandten Seite des Wärmeisolationsmaterials eine Schutzfolie aufgebracht ist.

Dieses Solarmodul zeichnet sich dadurch aus, dass das dotierte Halbleitermaterial, das bedeutet beispielsweise der Silizium-Wafer, unmittelbar durch die darunter angeordneten und damit in Kontakt stehenden Rohre aus Kunststoffmaterial, die die Strömungskanäle der Kühlstruktur bilden, gekühlt wird. Dadurch kann das Solarmodul in den Sommermonaten auf einem niedrigeren Temperaturniveau gehalten werden, wodurch sich eine signifikante Steigerung der elektrischen Leistung im Vergleich zu herkömmlichen Solarmodulen ergibt. Das durch die Kunststoffrohre fließende Kühlmittel kann durch die Rohre, die einen sehr geringen Innendurchmesser aufweisen und die unter einem sehr geringen Abstand zueinander angeordnet sind, sehr nahe und großflächig an die Solarzelle gebracht werden, wodurch sich eine hohe Wärmeübertragung und somit eine effektive Wärmeableitung aus den Zellen ergibt. Das sehr engmaschige Rohrsystem, vorzugsweise aus Polypropylen, wird vorzugsweise mit einem Gemisch aus Wasser und Glykol als Kühlmittel betrieben.

Die Kunststoffrohre sind äußerst kostengünstig und sind darüber hinaus keinen Korrosionseinflüssen, wie dies beispielsweise bei Kupferrohren der Fall ist, unterworfen. Da das Rohrsystem aus einzelnen Kunststoffrohren aufgebaut ist, die einen sehr geringen Durchmesser aufweisen und somit relativ geringe Mengen an Kühlflüssigkeit in den Rohren benötigt wird, kann eine hohe Dynamik des Systems erreicht werden, das sehr schnell auf Temperaturänderungen reagieren kann. Diese Dynamik ist auch dann gegeben, wenn das Rohrleitungssystem für Abtaufunktionen im Winter eingesetzt wird.

Die Funktion der sehr direkten Kühlung kann im Winter bei verschneiten Modulen umgedreht werden und als Heizung zum Abtauen von Schnee verwendet werden. Ebenfalls kann mittels dieser Heizfunktion der niedergeschlagene Tau in den Morgenstunden oder die vorhandene Feuchtigkeit nach einem Regenfall verdunstet werden.

Bevorzugst ist auch, das Modul bei einem niedrigeren Temperaturniveau zu betreiben, das bedeutet bei Temperaturen im Bereich von 25 °C, da dem Modul bei solchen Temperaturniveaus effektiver Wärme entzogen wird, was demzufolge einem höheren Wirkungsgrad gleichkommt. Die in dem Solarmodul erzeugte Wärme wird vor allem in den Wintermonaten benötigt. Daher empfiehlt es sich, diese Wärme in den Sommermonaten in einem Langzeitspeicher einzulagern und als Wärmereservoir für den Betrieb einer Wärmepumpe im Winter bereit zu stellen.

Vorzugsweise sollten die Rohre, die die Strömungskanäle der Kühlstruktur bilden, einen Innendurchmesser von 2 mm bis 2,5 mm aufweisen. Bevorzugt sollte der Abstand benachbarter Rohre 8 mm bis 12 mm nicht übersteigen. Schließlich sollte die Wandungsstärke der Rohre nicht mehr als 0,4 mm bis 0,6 mm betragen.

Als Material für die Rohre sollte Polypropylen eingesetzt werden. Solche Rohre mit den vorstehend angegebenen Dimensionen sind sehr flexibel, so dass sie auch unter engen Biegeradien unterhalb des Halbleitermaterials verlegt werden können.

Für das jeweilige Solarmodul sollten mehrere Rohre oder Rohrabschnitte vorgesehen werden, wobei jedes Rohr von dem einen Rand der Tragestruktur zu dem gegenüberliegenden Rand der Tragestruktur und von dort wieder zurück verläuft und wobei das eine Ende jedes Rohrs einen Zulauf und das andere Ende jedes Rohrs einen Ablauf für das Kühlfluid bildet. Dadurch liegen alle Zu- und Abläufe der Rohrabschnitte nur auf der einen Seite des Moduls.

Somit kann im Bereich der Enden der Rohre und dementsprechend im Bereich des einen Rands der Tragestruktur ein Kühlfluid-Zulaufrohr und ein Kühlfluid-Ablaufrohr angeordnet werden. Das jeweilige Zulaufende jedes Rohrs wird dann mit dem Kühlfluid-Zulauf verbunden und das jeweilige Ablaufende jedes Rohrs wird mit dem Kühlfluid-Ablauf verbunden.

Die Rohre sollten unter einem Biegeradius auf der einen Seite des Moduls verlegt werden, der im Bereich von 8 mm bis 20 mm, vorzugsweise im Bereich von 8 mm bis 12 mm, liegt.

Die Kühlstruktur sollte auch auf der dem Halbleitermaterial gegenüber liegenden Seite durch ein Wärmeisolationsmaterial gedämmt werden, für das vorzugsweise ein Polystyrolschaumstoff eingesetzt wird. Polystyrolschaumstoff ist sehr leicht und auch nachgiebig, so dass er eng an die Kühlrohre angedrückt werden kann.

Die Außenseite des Solarmoduls, das bedeutet die Außenseite des Wärmeisolationsmaterials, wird vorzugsweise durch eine Schutzfolie aus Aluminium abgedeckt. Eine solche Schutzfolie, insbesondere eine solche aus Aluminium, dient auch dazu, den Rahmen bzw. die Tragestruktur zu kühlen sowie die Wärme über das Solarmodul zu verteilen.

Wie vorstehend angedeutet ist, sollte die nicht benötigte aus dem Solarmodul abgeführte Wärme in einem Latentwärmespeicher gespeichert werden, der einen Teil einer zentralen Einheit eines Systems bildet. Über dieses System, das auch einen Hochtemperaturspeicher aufweist, wobei der Latentwärmespeicher und dieser Hochtemperaturspeicher bzw. das System, in das diese Speicher eingebaut sind, einen eigenständigen Aspekt der Erfindung darstellen können, wird Wärmeenergie, die in Sonnenkollektoren oder in den Wintermonaten mit einer reversiblen Split-Wärmepumpe erzeugt wird, gespeichert und für die Erwärmung des Brauchwassers sowie für den Betrieb der Heizkörper bereitgestellt. Dabei spielt die saubere Schichtung der unterschiedlichen Temperaturen eine entscheidende Rolle. Im oberen Bereich des Speichers sollte immer heißes Wasser von etwa 60-70°C für den Betrieb der Wärmetauscher der Verbraucher (z.B. Brauchwasserstation und Heizkörper) vorrätig sein. Die weitere Beladung des Solarspeichers erfolgt von oben nach unten, ohne dass die Schichtung durch Verwirbelungen des Speicherinhalts durcheinander gebracht wird und sich eine Mischtemperatur einstellt. Dies wird durch die Möglichkeit der Umschaltung des Wärmestroms von den Sonnenkollektoren (ca. 70°C) vom oberen zum unteren Wärmetauscher erreicht und dadurch, dass heißes von der Wärmepumpe kommendes Wasser oben in den Speicher mit einer Schichtlanze eingebracht und unten mit einem Tauchrohr entnommen wird. Eine zusätzliche Prallplatte soll dennoch möglicherweise auftretende Verwirbelungen der Temperaturschichten verhindern. Der Speicher wird vorrangig von den Sonnenkollektoren beladen. Reicht die Wärmeleistung auf Grund der mangelnden Sonneneinstrahlung nicht aus, übernimmt die Wärmepumpe diese Aufgabe, indem sie zunächst als Sole/Wasser-Wärmepumpe den Wärmeinhalt des Latentwärmespeichers als Energiereservoir nutzt. Ist auch dieser Wärmespeicher wegen mangelnder Sonneneinstrahlung erschöpft, schaltet die Split-Wärmepumpe auf Luft/Wasser-Betrieb um und entnimmt der Umgebungsluft die notwendige Wärmeenergie. Die Wärmepumpe kann den Hochtemperaturspeicher mit etwa 60 °C beladen. Entladen wird der Speicher beim Betrieb der Nutzwasserstation zur Erzeugung von warmem Brauchwasser und beim Betrieb des Wärmetauschers für die Heizkörperanlage. Dabei wird im oberen Bereich des Speichers mit einem Tauchrohr das etwa 60 bis 70 °C heiße Wasser entnommen und durch Plattenwärmetauscher an den Verbraucher abgegeben. Der Volumenstrom wird dabei mit einer regelbaren Pumpe so eingestellt, dass die Rücklauftemperatur vom Plattenwärmetauscher der Speicherwasser-Temperatur an der Eintrittsstelle der Schichtlanze oberhalb der Prallplatte, über die das Wasser in den Speicher zurückgeführt wird, entspricht.

Der zweite Speicher des Systems, bietet die Möglichkeit Wärmeenergie auf einem niedrigeren Temperaturniveau in größerer Menge zu speichern. Dieser Latentwärmespeicher nimmt die Wärme von etwa 36°C die dem Solar-Modul beim Kühlen entzogen wird auf und speichert diese über einen langen Zeitraum mit etwa 30°C nahezu verlustfrei. Diese Wärme kann dann in der kälteren Jahreszeit für die Erwärmung des Fußbodens über das Kapillarrohrmattensystem oder Fußbodenheizungssystem genutzt werden. Die Größe des Latentwärmespeichers richtet sich nach der Fläche der Solar-Anlage sowie nach der regionalen Sonneneinstrahlung. Die Entnahme der Wärme aus dem Speicher erfolgt über eine hydraulische Weiche, die im Vorlauf des Latentwärmespeichers angebracht ist. Hier steht bei ausreichend Sonnenschein und Beladen des Speichers 36°C warme Kühlflüssigkeit, kommend von den temperierten PV-Modulen zur Verfügung oder beim Umschalten des Bypass-3-Wege-Ventils auf Entladen 26°C Entladetemperatur aus dem Speicher zur Verfügung. Beide Temperaturniveaus können von der Wärmepumpe verarbeitet werden. Auch die Fußbodenheizung kann beide Niveaus durch Beimischung über das 3-Wege-Ventil verwenden.

Steigt in den Sommermonaten die Gebäudetemperatur an, wird die reversible Split-Wärmepumpe dazu genutzt, die dann im Latentwärmespeicher ausreichend zur Verfügung stehende Energie zur Gebäudekühlung zu nutzen. Die hierfür notwendige elektrische Leistung ist im Vergleich zur erreichbaren Kühlleistung sehr gering und gleichzeitig wird eine Überhitzung des Systems verhindert, indem der Wärmespeicher entleert und die überschüssige Wärme auch über die Außeneinheit abgegeben wird.

Möglich macht das Zusammenspiel der einzelnen Komponenten erst der Einsatz einer übergeordneten intelligenten Steuerung und Regelung. Diese hat die Aufgabe die einzelnen Systeme so einzusetzen, dass sie ihre optimale Wirkung und den höchsten Wirkungsgrad erreichen können. Dazu wird das System mit einer Vielzahl an Sensoren und Aktoren ausgerüstet, die die zur Regelung notwendigen lnformationen liefern und die Komponenten ansteuern. Dazu gehören insbesondere Außentemperatur, Wind- und Globalstrahlungsgeber um auf Wetteränderungen schnell reagieren zu können. Die Onlineabfragung der Wettervorhersage wird genutzt um eine Entscheidung über die Entleerung des Latentwärmespeichers in der Nacht zu treffen. Volumenstrom und Temperaturmessungen der Wärmeerzeuger und Verbraucher dienen der Erfassung der thermischen Leistung und die elektrische Leistungsmessung der Photovoltaikanlage und der Anlagenkomponenten zur Erfassung der elektrischen Leistung. Anhand des Globalstrahlungswertes und der Leistungserfassung kann online immer der aktuelle solare Deckungsgrad und somit die Effizienz dieses intelligenten Energieversorgungssystems erfasst werden. Zur Einstellung des Systems wird ein Touchpanel eingesetzt, welches die Menüführung optisch so darstellt, dass es dem Nutzer der Anlage möglich ist die Anlage intuitiv zu bedienen.

Weitere Einzelheiten und Merkmale der Erfindung ergeben sich aus der nachfolgenden Beschreibung eines Ausführungsbeispiels anhand der Zeichnung. ln der Zeichnung zeigt
- Figur 1: schematisch einen Querschnitt eines erfindungsgemäßen Solarmoduls und
- Figur 2: einen Schnitt entlang der Schnittlinie ll ― II in Figur 1, der den Verlauf der Rohrleitungen verdeutlicht.

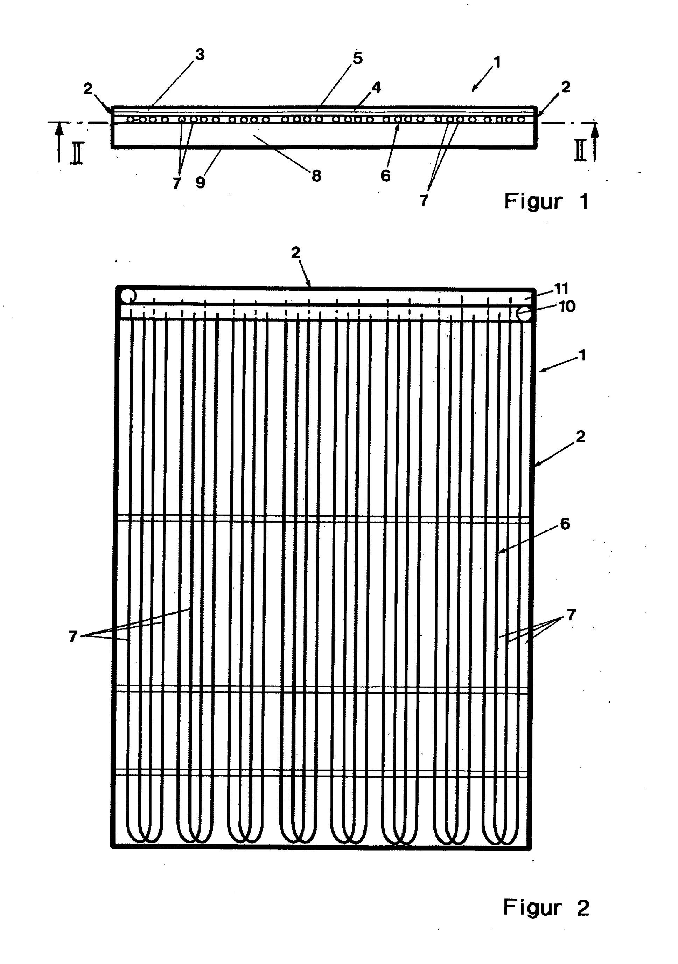

Das Solarmodul 1, wie es in den Figuren 1 und 2 dargestellt ist, umfasst eine Tragestruktur 2 in der Form eines Aluminiumrahmens, der den Rand des gesamten Moduls umfasst. Auf der oberen Seite des Solarmoduls 1 ist eine Schutzscheibe 3 aus hochtransparentem, gehärtetem Glas vorgesehen, die das darunter liegende Halbleitermaterial bzw. die in einem glasklaren Kunststoffmaterial eingebetteten Solarzellen 4 abdeckt. Auf der der Schutzscheibe 3 gegenüber liegenden Seite des Halbleitermaterials 4 befindet sich eine im Wesentlichen formstabile Trägerschicht 5. Bei dieser Trägerschicht 5 handelt es sich beispielsweise um eine Kunststoffverbundfolie, die zum Beispiel aus Polyvinylfluorid- und Polyesterschichten zusammengesetzt ist.

An der unteren Seite dieser Trägerschicht 5 ist eine nicht näher dargestellte Anschlussdose für die elektrischen Anschlüsse der Solarzellen 4 aufgeklebt.

Auf der den Solarzellen 4 gegenüber liegenden Seite der Trägerschicht 5 ist eine Kühlstruktur 6 angeordnet, die aus einzelnen dünnen Kunststoffrohren 7 aufgebaut ist.

Die Kühlstruktur 6 ist auf der außen liegenden Seite durch ein Wärmeisolationsmaterial 8 abgedeckt, bei dem es sich um einen Polystyrolschaum, vorzugsweise einer geringen Härte, handelt.

Das Wärmeisolationsmaterial 8 ist schließlich auf dessen Außenseite durch eine Schutzfolie 9 bedeckt, bei der es sich vorzugsweise um eine Aluminiumfolie handelt.

Wie anhand der Figur 2 ersichtlich ist, schließt der Aluminiumrahmen 2 den Rand des gesamten Moduls, wobei zwischen dem Aluminiumrahmen 2 und den Rändern der weiteren Modulteile, das bedeutet der Glasscheibe 3, der Solarzelle 4, der Trägerschicht 5, der Kühlstruktur 6, des Wärmeisolationsmaterials 8 und der Schutzfolie 9, eine Dichtung angeordnet ist, die in den Figuren nicht näher dargestellt ist.

Die Kühlstruktur 6 ist aus mehreren, einzelnen Kunststoffrohren bzw. Rohrabschnitten 7 zusammengesetzt, wobei jeder Rohrabschnitt 7 von der einen Seite des Solarmoduls 1, in Figur 2 dem oberen Rand, von einem Kühlfluid-Zulaufrohr 10 ausgeht, von dort zu dem unteren Rand, etwa parallel zu dem Seitenrand der Tragestruktur 2, verläuft und von dort wieder zurück zu dem oberen Ende der Tragestruktur verläuft und dort in einem Kühlfluid-Ablaufrohr 11 endet. Somit sind alle Rohrabschnitte 7 mit ihrem Zulaufende mit dem Kühlfluid-Zulaufrohr 10 und mit ihrem Ablaufende mit dem Kühlfluid-Ablaufrohr 11 strömungsmäßig verbunden, so dass alle Rohrabschnitte 7 gemeinsam über das Kühlfluid-Zulaufrohr 10 mit Kühlfluid versorgt werden und entsprechend das Kühlfluid aus den Rohrabschnitten 7 über das Kühlfluid-Ablaufrohr 11 abgeführt wird.

Die Kunststoffrohre 7 weisen einen Außendurchmesser im Bereich von 2,3 mm bis 3,7 mm bei einer Wandungsstärke von 0,4 mm bis 0,6 mm und einem Innendurchmesser von 1,5 mm bis 3,00 mm auf. Vorzugsweise sollte der Innendurchmesser möglichst gering gehalten werden, das bedeutet, Innendurchmesser im Bereich von 1,5 bis 2,5 mm sind bevorzugt.

Die Kunststoffrohre 7, vorzugsweise aus Polypropylen, sind sehr flexibel, so dass sie in engen Radien gebogen werden können, wie dies an dem unteren Rand des Solarmoduls, wie dies die Figur 2 zeigt, erforderlich ist. Der Biegeradius der Rohrabschnitte 7 sollte bei 8 mm bis 20 mm, vorzugsweise bei 8 mm bis 12 mm, liegen. Entsprechend beträgt der Abstand von Rohrachse zu Rohrachse benachbarter Rohre 8 mm bis 20 mm, vorzugsweise 8 mm bis 12 mm. Auf diese Art und Weise kann die Rückseite der Solarzellen sehr dicht belegt werden, um dadurch eine Kühlstruktur 6 mit einer hohen Kühlleistung zu erzielen.

Die Rohre der Kühlstruktur 6 sind an der Trägerschicht 5 und/oder dem Wärmeisolationsmaterial 8 verklebt. Die Platte aus dem Wärmeisolationsmaterial 8 kann durch Spannfedern, die zwischen gegenüber liegenden Seiten der Tragestruktur 2 verlaufen, in der Tragestruktur 2 gehalten werden. Durch diese Spannfedern, die in den Figuren nicht dargestellt sind, werden die Kunststoffrohre 7 der Kühlstruktur 6 über das Wärmeisolationsmaterial 8 an die Trägerschicht 5 und damit an die Solarzellen 6 angedrückt, um einen effektiven Wärmeübergang zu erzielen.

Die Funktionsweise des Solarmoduls 1 ist wie folgt: Die Solarzellen 4 werden von der Sonne bestrahlt, die Elektronen absorbieren die Photonen des Lichts und erzeugen eine elektrische Spannung. Durch die im Strahlungsspektrum der Sonne enthaltene Wärmestrahlung lässt aber auch die Temperatur des Moduls stark ansteigen, wodurch der elektrische Wirkungsgrad der Solarzellen erheblich verschlechtert wird. Bei dem vorliegenden Solarmodul wird aber die Wärme auf das in der Kühlstruktur 6 geführte Kühlfluid übertragen und über die Kühlflüssigkeit aus dem Solarmodul 1 abgeführt. Dadurch wird der elektrische Wirkungsgrad der Solarzellen konstant auf einem hohen Niveau gehalten.

Die aus dem Solarmodul 1 abgeführte Wärme kann für ein Heizungs- und Klimasystem genutzt werden. Insbesondere in den Sommermonaten, in denen die durch die Solarmodule erzeugte Wärmeenergie nicht zur Erwärmung von Wasser benötigt wird, kann die Wärmeenergie in geeigneten Speichern gespeichert werden, indem sie über eine Pumpe und einen Wärmetauscher in einem geeigneten Speicher eingelagert wird. Ein solcher Speicher kann dann einer Wärmepumpe als Wärmereservoir dienen.

Die Vorteile des erfindungsgemäßen Solarmoduls liegen in einem sehr hohen elektrischen Wirkungsgrad und der Möglichkeit, thermische Energie von etwa 400W/m² zu nutzen. Weiterhin sind die Abtaufunktion bei verschneiten bzw. mit Reif oder Tau benetzten Moduloberflächen sowie eine lange Modullebensdauer durch geringere Temperaturschwankungen innerhalb des Solarmoduls anzuführen.

## Patentansprüche

1. Solarmodul mit einer Tragestruktur, einer in der Tragestruktur gehaltenen strahlungstransparenten Schutzscheibe, die dotiertes Halbleitermaterial abdeckt, und mit einer das Halbleitermaterial auf der der Schutzscheibe gegenüberliegenden Seite unterlegenden Trägerschicht sowie mit einer auf der Außenseite der Trägerschicht liegenden ein Kühlfluid führenden Kühlstruktur, wobei die Kühlstruktur mehrere durch Rohre gebildete Strömungskanäle aufweist, **dadurch gekennzeichnet, dass** die Rohre (7) der Strömungskanäle der Kühlstruktur (6) aus einem Kunststoffmaterial gebildet sind und einen Innendurchmesser von 1,5 mm bis 3 mm aufweisen, wobei benachbarte Rohre einen Abstand, von Rohrachse zu Rohrachse gesehen, von 8 mm bis 20 mm aufweisen, dass die Kühlstruktur (6) auf der dem Halbleitermaterial (4) abgewandten Seite durch ein Wärmeisolationsmaterial (8) gedämmt ist, und dass auf der der Kühlstruktur (6) abgewandten Seite des Wärmeisolationsmaterials (8) eine Schutzfolie (9) aufgebracht ist.

2. Solarmodul nach Anspruch 1, **dadurch gekennzeichnet, dass** die Rohre (7) einen Innendurchmesser 2 mm bis 2,5 mm aufweisen.

3. Solarmodul nach Anspruch 1 oder 2, **dadurch gekennzeichnet, dass** benachbarte Rohre (7) einen Abstand von 8 mm bis 12 mm aufweisen.

4. Solarmodul nach einem der Ansprüche 1 bis 3, **dadurch gekennzeichnet, dass** die Rohre (7) eine Wandungsstärke von 0,4 mm bis 0,6 mm aufweisen.

5. Solarmodul nach einem der Ansprüche 1 bis 4, **dadurch gekennzeichnet, dass** die Rohre (7) aus Polypropylen gebildet sind.

6. Solarmodul nach einem der Ansprüche 1 bis 5, **dadurch gekennzeichnet, dass** mehrere Rohre oder Rohrabschnitte (7) vorgesehen sind, wobei jedes Rohr (7) von dem einen Rand der Tragestruktur (2) zu dem gegenüberliegenden Rand der Tragestruktur (2) und von dort wieder zurück verläuft und wobei das eine Ende jedes Rohrs (7) einen Zulauf (10) und das andere Ende jedes Rohrs einen Ablauf (11) für das Kühlfluid bildet.

7. Solarmodul nach Anspruch 6, **dadurch gekennzeichnet, dass** jedes Rohr (7) unter einem Biegeradius von dem gegenüberliegenden Rand der Tragestruktur (2) zurück verläuft, der im Bereich von 8 mm bis 20 mm, vorzugsweise im Bereich von 8 mm bis 12 mm, liegt.

8. Solarmodul nach Anspruch 6 oder 7, **dadurch gekennzeichnet, dass** im Bereich der Enden der Rohre (7) im Bereich des einen Rands der Tragestruktur (2) ein Kühlfluid-Zulaufrohr (10) und ein Kühlfluid-Ablaufrohr (11) angeordnet sind, wobei das jeweilige Zulaufende jedes Rohrs (7) mit dem Kühlfluid-Zulauf (10) verbunden ist und das jeweilige Ablaufende jedes Rohrs (7) mit dem Kühlfluid-Ablauf (11) verbunden ist.

9. Solarmodul nach einem der Ansprüche 1 bis 8, **dadurch gekennzeichnet, dass** das Wärmeisolationsmaterial (8) aus einem Polystyrolschaumstoff gebildet ist.

10. Solarmodul nach einem der Ansprüche 1 bis 9, **dadurch gekennzeichnet, dass** die Schutzfolie (9) aus einer Aluminiumfolie gebildet ist.
